# EUROPÄISCHE PATENTSCHRIFT

(11) **EP 2 921 338 B1**
(45) Veröffentlichungstag und Bekanntmachung des Hinweises auf die Patenterteilung: **23.08.2017**
(21) Anmeldenummer: 15450014.4
(22) Anmeldetag: 20.03.2015
(51) Int. Cl.: B60M 1/20

(54) **FAHRLEITUNGSMAST FÜR OBERLEITUNGSANLAGEN ELEKTRISCHER SCHIENENFAHRZEUGE**
MAST FOR CATENARY ASSEMBLIES FOR ELECTRIC RAILWAY VEHICLES
MÂT CATÉNAIRE POUR DES INSTALLATIONS DE CATÉNAIRE DE VÉHICULES ÉLECTRIQUES DE CHEMIN DE FER

(30) Priorität: 21.03.2014 AT 2062014
(43) Veröffentlichungstag der Anmeldung: 23.09.2015
(73) Patentinhaber: Ing. Karl u. Albert Kruch GmbH & Co. KG, 1230 Wien (AT)
(72) Erfinder: Röhl, Jan, 2500 Siegenfeld (AT)
(74) Vertreter: Rippel, Andreas

(56) Entgegenhaltungen:
- WO-A1-2014/191935
- CH-A- 153 665
- DE-C- 172 462
- DE-C1- 691 536
- JP-A- 2013 039 873
- JP-U- S 529 904
- JP-U- S 529 905

## Beschreibung

Die Erfindung bezieht sich auf einen Fahrleitungsmast für Oberleitungsanlagen elektrischer Schienenfahrzeuge, der von zwei im Bereich ihrer Enden miteinander verbundenen Formrohren gebildet ist, wobei die Formrohre parallel zueinander verlaufen und parallel zum Gleis angeordnet sind.

Bisher bekannte Fahrleitungsmaste bestehen aus Beton oder sind als metallische Gittermaste ausgebildet. Betonmaste haben den Nachteil, daß sie z.B. bei einem unbeabsichtigten Anfahren Beschädigungen erleiden können, welche vorerst gar nicht erkennbar sind, aber schließlich zur Zerstörung des Mastes führen können.

Die Herstellung von Gittermasten aus Stahl ist verhältnismäßig teuer. Die Alterung durch Korrosion und Rissbildung ist gegenüber Betonmasten kontrollierbar.

Aus der JP S52 9904 U ist ein Mast bekannt, bei dem die Formrohre in A-Form angeordnet sind, wobei das "A" senkrecht zum Gleis steht. Eine solche Anordnung ist zur Übertragung der Kräfte von der Oberleitungsanlage alles andere als optimal.

In der nicht vorveröffentlichten Wo 2014/191935A1 ist ein Fahrleitungsmast beschrieben, der die eingangs genannten Merkmale aufweist. Dabei sind zwei Formrohrpaare in Abstand voneinander angeordnet und durch Querstreben miteinander verbunden.

Bei bekannten Masten erfolgt die Anbringung der Ausleger für die Halterung der Oberleitung meist mittels den Mast umgreifenden Schellen, die durch Schrauben verspannt werden. Bei einer notwendigen Veränderung der Höhe des Fahrdrahtes,muß eine Vielzahl von Schrauben gelöst, die Ausleger verschoben und die Schrauben wieder angezogen werden. Ein solches Verfahren ist umständlich und teuer.

Die Erfindung hat unter Verwendung des erfindungsgemäßen Fahrleitungsmastes eine Anordnung geschaffen, mit der eine Veränderung der präzisen Höhenlage der Oberleitung bzw. des Fahrdrahtes auf weitaus einfachere Art erreichbar ist als es bisher möglich war.

Diese erfindungsgemäße Anordnung zeichnet sich dadurch aus, dass an den Formrohren Führungen für einen die Formrohre nach oben verlängernden Träger angeordnet sind, der einen die Oberleitung haltenden Ausleger trägt, wobei der Träger in den Führungen verschieb- und feststellbar ist.

Wenn bei einer mit einem erfindungsgemäßen Fahrleitungsmast ausgestatteten Oberleitungsanlage die Höhenlage des Fahrdrahtes verändert werden muss, wird die Feststellung des Trägers in der Führung gelöst und der Träger in die gewünschte Höhe verschoben.

Besonders einfach ist dies, wenn bei einem bevorzugten Ausführungsbeispiel der Erfindung eine auf den Träger wirkende Stellschraube und an einer Führung eine Fixierschraube angeordnet ist. Es muss dann bloß die Fixierschraube gelöst und durch Betätigung der Stellschraube der Träger auf die gewünschte Höhe verstellt werden, worauf die Fixierschraube wieder angezogen wird.

Bei einer besonders montagefreundlichen Ausführungsform der Erfindung ist der Träger als T-Stahlträger oder Doppel T-Stahlträger, vorzugsweise Breitflanschträger ausgebildet, der eine Ausklinkung aufweist, mittels der er in eine Führung einsetzbar ist.

Dadurch ist es möglich, am Träger vor dessen Anbringung am Mast den Ausleger zu montieren und dann den komplett vormontierten Träger im Bereich der Ausklinkung in die Führung einzusetzen, zu verschieben und festzustellen.

Bei einem weiteren Ausführungsbeispiel der Erfindung ist eines der beiden Formrohre gegenüber der Verbindung der Formrohre nach oben verlängert und an der Verlängerung ist die Rolle eines Radspannwerkes befestigt.

Nachstehend ist die Erfindung anhand von in den Zeichnungen dargestellten Ausführungsbeispielen näher beschrieben, ohne auf diese Beispiele beschränkt zu sein. Dabei zeigen:
Fig. 1 eine Seitenansicht eines erfindungsgemäßen Fahrleitungsmastes für Oberleitungsanlagen elektrischer Schienenfahrzeuge;
Fig. 2 eine Ansicht des Fahrleitungsmastes nach der Erfindung quer zur Ansicht nach Fig. 1;
Fig. 3 eine schaubildliche Ansicht des Fahrleitungsmastes nach den Fig. 1 bis 3;
Fig. 4 eine schaubildliche Ansicht eines Fahrleitungsmastes einer weiteren Ausführungsform der Erfindung;
Fig. 5 in vergrößertem Maßstab ein Detail der Ausführungsform nach Fig. 4.

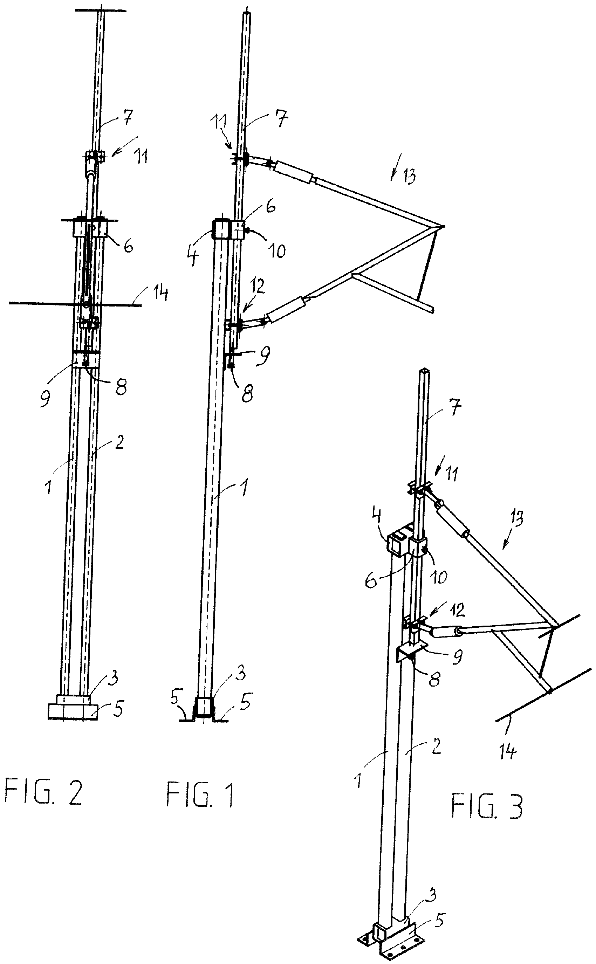

Gemäß den Fig. 1 bis 3 weist ein erfindungsgemäßer Fahrleitungsmast zwei Formrohre 1 und 2 auf, die unten durch ein Verbindungsstück 3 und oben durch ein Verbindungsstück 4 miteinander verbunden sind. Am Verbindungsstück 3 sind Winkel 5 befestigt, die mit einem Fundament (nicht dargestellt) verschraubt sind.

Am oberen Verbindungsstück 4 ist eine Führung 6 für einen Träger 7 befestigt, der in der Führung 6 lotrecht verschiebbar ist. Am unteren Ende des Trägers 7 greift eine Stellschraube 8 an, die in einem Winkel 9 verschraubbar ist, der mit den Formrohren 1 und 2 verbunden ist.

In die Führung 6 ist eine Fixierschraube 10 einschraubbar, die auf den Träger 7 wirkt um ihn festzustellen.

Am Träger 7 ist bei 11 und 12 ein bekannter Z-Ausleger 13 befestigt. Dieser hält den Fahrdraht 14 in der gewünschten Höhenlage über dem Gleis (nicht dargestellt).

Sollte die Höhenlage des Fahrdrahtes über dem Gleis verändert werden, braucht nur die Fixierschraube 10 gelöst und durch entsprechendes Verschrauben der Stellschraube 8 der Träger 7 vertikal verstellt werden. Bei Erreichen der gewünschten Höhenlage wird die Fixierschraube 10 wieder angezogen.

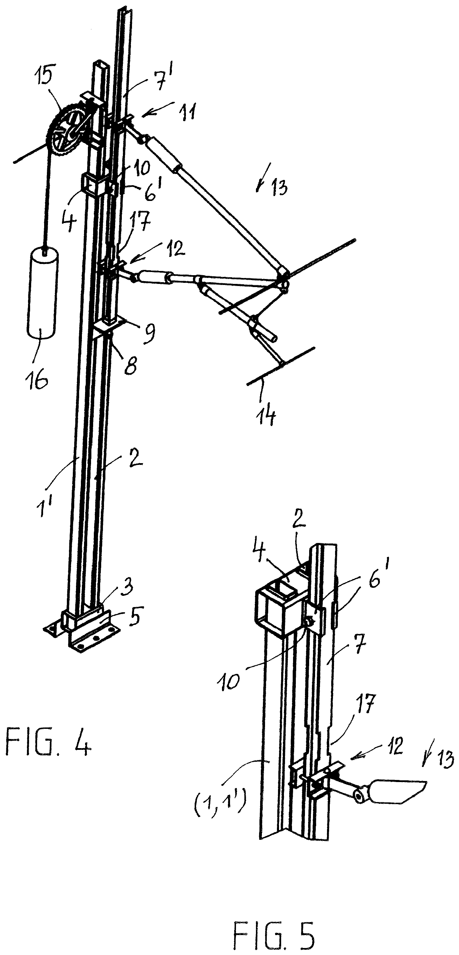

In den Fig. 4 und 5 sind für gleiche Teile die gleichen Bezugszeichen verwendet wie in den Fig. 1 bis 3.

Ein Unterschied gegenüber dem Ausführungsbeispiel nach den Fig. 1 bis 3 ist, dass das eine Formrohr 1' des Mastes gegenüber dem Verbindungsstück 4 nach oben verlängert ist. An dieser Verlängerung ist die Rolle 15 eines Radspannwerkes befestigt, dessen Gewicht 16 die Oberleitung spannt.

Eine Besonderheit, welche die Montage wesentlich erleichtert, unterscheidet diese Ausführungsform von der in den Fig. 1 bis 3 beschriebenen Variante.

Der Träger 7' ist vorzugsweise als Breitflanschträger ausgebildet und weist eine Ausklinkung 17 auf. Die Führung 6' besteht aus zwei Teilen, wobei zwischen den beiden Teilen ein so großer Abstand ist, dass der Träger 7' im Bereich der Ausklinkung 17 in die Führung 6' eingesetzt werden kann, worauf er vertikal verschoben und mit der Fixierschraube 10' festgestellt wird.

Aus Gründen der Übersichtlichkeit ist in Fig. 5 das Formrohr 1 bzw. 1' in der nicht verlängerten Ausführungsform dargestellt.

Im Rahmen der Erfindung sind noch zahlreiche Abänderungen möglich. So kann der Träger 7' auch nicht als Breitflanschträger ausgebildet sein, soferne er genügend breite Flanschen zur Anbringung der Ausklinkung aufweist. Zur Aufhängung des Fahrdrahtes 14 könnte eine andere Ausführung statt des dargestellten bekannten Z-Auslegers gewählt werden. Auch könnte zur Verankerung des Mastes ein in das Erdreich eingebrachtes Rammrohr vorgesehen sein, wobei der Zwischenraum zwischen dem eingeführten Ende des Mastes und dem Rammrohr durch eine verdichtete Masse, insbesondere Schotter gefüllt ist.

## Patentansprüche

1. Fahrleitungsmast für Oberleitungsanlagen elektrischer Schienenfahrzeuge, der von zwei im Bereich ihren Enden miteinander verbundenen Formrohren (1, 1', 2) gebildet ist, wobei die Formrohre (1, 1', 2) parallel zueinander verlaufen und parallel zum Gleis angeordnet sind, **dadurch gekennzeichnet, daß** an den Formrohren (1, 1', 2) Führungen (6, 6') für einen die Formrohre (1, 1", 2) nach oben verlängernden Träger (7, 7') angeordnet sind, der einen die Oberleitung (14) haltenden Ausleger (13) trägt, wobei der Träger (7, 7') in den Führungen (6, 6') verschieb- und feststellbar ist.

2. Fahrleitungsmast nach Anspruch 1, **dadurch gekennzeichnet, daß** eine auf den Träger (7, 7') wirkende Stellschraube (8) und an einer Führung (6, 6') eine Fixierschraube (10) angeordnet ist.

3. Fahrleitungsmast nach Anspruch 2, **dadurch gekennzeichnet, daß** der Träger (7) als T-Stahlträger oder Doppel T-Stahlträger, vorzugsweise Breitflanschträger ausgebildet ist, der eine Ausklinkung (17) aufweist, mittels der er in eine Führung (6') einsetzbar ist.

4. Fahrleitungsmast nach Anspruch 1 oder 2, **dadurch gekennzeichnet, daß** eines (1') der beiden Formrohre (1', 2) gegenüber der Verbindung (6') der Formrohre (1', 2) nach oben verlängert ist und an der Verlängerung die Rolle (15) eines Radspannwerkes befestigt ist.

## Claims

1. A catenary mast for overhead wire systems of electric rail vehicles, which is formed from two shaped tubes (1, 1', 2) which are connected to one another in the region of the ends thereof, wherein the shaped tubes (1, 1', 2) run parallel to one another and are arranged parallel to the track, **characterized in that** guides (6, 6') are arranged on the shaped tubes (1, 1', 2) for a support (7, 7') extending the shaped tubes (1, 1'', 2) upwards, which support carries an outrigger (13) holding the overhead wire (14), wherein the support (7, 7') can be displaced and fixed in the guides (6, 6').

2. The catenary mast according to Claim 1, **characterized in that** an adjusting bolt (8) acting on the support (7, 7') is arranged and a fixing bolt (10) is arranged on a guide (6, 6').

3. The catenary mast according to Claim 2, **characterized in that** the support (7) is constructed as a T steel beam or double T steel beam, preferably a wide-flanged beam, which has a notch (17), by means of which it can be inserted into a guide (6').

4. The catenary mast according to Claim 1 or 2, **characterized in that** one (1') of the two shaped tubes (1', 2) is extended upwards with respect to the connection (6') of the shaped tubes (1', 2) and the pulley (15) of a tensioning pulley gear is fastened on the extension.

## Revendications

1. Mât support de caténaire pour installations de ligne de contact de véhicules ferroviaires électriques, qui est formé de deux tubes moulés (1, 1', 2) reliés l'un à l'autre dans la zone de leurs extrémités, les tubes moulés (1, 1', 2) étant disposés passant parallèles l'un à l'autre et parallèles à la voie, **caractérisé en ce que** des guidages (6, 6') sont disposés sur les tubes moulés (1, 1', 2) pour un support (7, 7') prolongeant les tubes moulés (1, 1'', 2) vers le haut, qui porte une potence (13) supportant la ligne de contact (14), le support (7, 7') pouvant être déplacé et fixé dans les guidages (6, 6').

2. Mât support de caténaire selon la revendication 1, **caractérisé en ce qu'**une vis de réglage (8) agissant sur le support (7, 7') et une vis de fixation (10) sont disposées sur un guidage (6, 6').

3. Mât support de caténaire selon la revendication 2, **caractérisé en ce que** le support (7) est constitué comme une poutre en acier en T ou une poutre en acier en T double, de préférence une poutre à larges ailes, qui comporte une entaille (17) au moyen de laquelle elle peut être insérée dans un guidage (6').

4. Mât support de caténaire selon la revendication 1 ou 2, **caractérisé en ce qu'**un (1') des deux tubes moulés (1', 2) est prolongé vers le haut par rapport à la liaison (6') des tubes moulés (1', 2) et la poulie (15) d'un système de tension à roue est fixée sur la prolongation.
